# EUROPEAN PATENT APPLICATION

(11) **EP 0 952 232 A2**
(43) Date of publication of application: **27.10.1999**
(21) Application number: 99400708.6
(22) Date of filing: 23.03.1999
(51) Int. Cl.: C21D 1/76

(54) **Gas mixture and process for the thermal treatment of metallic workpieces, using the gas mixture**

(30) Priority: 23.04.1998 DE 19818272
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Frohlich, Hans, 06184 Dollnitz (DE); Flacke, Wolfgang, 39118 Magdeburg (DE); Grundmann, Joachim, 93100 Montreuil (FR); Heine, Fernand, 40235 Düsseldorf (DE)
(74) Representative: Mellul, Sylvie Lisette

(57) **Abstract**

The present invention relates to a gas mixture containing a fuel gas, an additive and, if appropriate, a protective gas, and to a process for thermal Otreatment of metallic, in particular copper-containing, workpieces, using the gas mixture, wherein, at least in the high-temperature phase of the thermal treatment process above 500°C, the workpiece surface is exposed to a flame atmosphere consisting of a sub-stoichiometric fuel gas/oxygen mixture with a maximum fuel gas excess of 20% and is subsequently cooled down by means of a liquid or a gas or both.

The gas mixture contains at least 50%, preferably at least 95%, of hydrocarbon gases or hydrogen or a mixture thereof as the fuel gas and, if appropriate, nitrogen or inert gases or a mixture thereof as the protective gas and at most 50%, preferably at most 5%, of hydrogen phosphide or silane or hydrogen sulphide or ammonia or a mixture of two or more of these as the additive.

Using the invention, oxide surfaces, in particular of copper-containing workpieces, can be detached easily and without leaving a residue.

## Description

The invention relates to a gas mixture, containing a fuel gas, an additive and, if appropriate, a protective gas, and to a process for a thermal treatment, such as soldering, annealing or flame-spraying, of metallic workpieces, using a burner device and the fuel gas as well as oxygen or air or a mixture thereof.

It is known that, in the thermal treatment of metallic workpieces, the atmosphere has, as a function of the duration and temperature of the thermal treatment, an influence on the surface and on the internal microstructure of the material. This influence manifests itself in oxidation processes on the surface of the workpiece, visible say by tarnishing colours and/or layers of scale, or in the diffusion of oxygen or nitrogen into the interior of the material, where the result is changes in the strength, for example.

For the replacement or dilution (so-called inertization) of other, reactive gases, in particular oxygen and air, it has therefore been long-standing practice to carry out the thermal treatment of sensitive metallic workpieces in an artificial atmosphere. In this way, the harmful influence of the oxygen and nitrogen present in the natural atmosphere can be very largely precluded. Such artificial atmospheres consist in most cases of rare gases or chemically unreactive gases such as nitrogen, in most cases as a mixture with gas fractions having a reducing action, such as hydrogen or carbon monoxide, or exclusively pure hydrogen.

It is also usual to carry out thermal treatments in vacuum furnaces, whereby the influence of the atmosphere is avoided in the same way.

The thermal treatment of metallic workpieces in an artificial atmosphere has hitherto been possible only if the workpiece as a whole is introduced into a space sealed from the natural atmosphere, for example a protective-gas furnace or vacuum furnace, and remains exposed to the artificial atmosphere until the temperature of the workpiece has again sufficiently fallen so that a harmful interaction with the natural atmosphere can no longer occur.

The same also applies to thermal treatment methods in which the workpiece is treated under a covering by a liquid, for example under an oil or a salt melt, or by a granulated or pulverized solid material, for example silica.

The welding processes and related processes also represent as a rule a thermal treatment of a workpiece, the fuzed weld and the heat-affected zone being protected against atmospheric influences by appropriate means, for example protective gas flows, protective atmospheres, vacuum, molten slag and submersion under powder. In this case, processes are also known in which the protective medium, i.e. the protective gas, is generated only during the welding process under the effect of the welding process energy.

In brazing, for example, fluxes are additionally used for protecting the solder and the soldering site, which fluxes not only cover the heated material with a thin layer of molten flux and thus protect it from attack by the oxygen in the air, but are also so active chemically that they can reduce already formed oxides again, so that the soldering area remains metallically clean. For brazing by means of a fuel gas/oxygen flame, a procedure is also known in which the fuel gas is passed through a liquid effective as a flux, the fuel gas flow being loaded with the vapour and the aerosol of the flux and then being passed with the fuel gas through hoses, the burner and nozzles directly into the flame so that it can deploy its effect here and on the workpiece. It is also known to use premixed flux and solder, in which case the intensity of the mixing can differ widely. It ranges from coated or filled solder rods via solder pastes up to specially alloyed soldering materials, for example copper/phosphorus solders.

An essential disadvantage in the thermal treatment of metallic materials, particularly in the case of soldering and annealing of copper and copper alloys, is that, at the moment at which oxygen reaches the heated workpiece surface by chance or as a result of the process, a firmly adhering oxide layer forms immediately. This oxide layer not only impairs the external colour impression of the workpiece, but it also impedes the subsequent usefulness, for example the electrical contact resistance, and subsequent treatment or working processes. This then necessitates an additional effort in the form of working time, energy and means for the removal of these oxide layers.

It is the object of the invention to improve the effectiveness of the thermal treatment, such as soldering, annealing or flame-spraying, of metallic workpieces, in particular copper-containing workpieces, by means of a gas mixture and of a process for the thermal treatment of metallic workpieces, using the gas mixture, by means of which the expense of the removal of oxide layers on metallic workpieces, in particular copper-containing workpieces, which have been partially or wholly heated to a high temperature, is substantially reduced.

This object is achieved according to the invention by a gas mixture according to Claim 1 and by a process, using the gas mixture, according to Claim 5. Further, particularly advantageous embodiments of the invention are disclosed by the particular subclaims.

The gas mixture, containing a fuel gas, an additive and, if appropriate, a protective gas, is characterized according to the invention in that hydrocarbon gases or hydrogen or a mixture thereof is present as the fuel gas, hydrogen phosphide or silane or hydrogen sulphide or ammonia or a mixture of two or more of these is present as the additive, and nitrogen or inert gases or a mixture thereof is present as the protective gas.

Preferably, the gas mixture is in the form of a mixture which is made up ready for use and which contains at least 50% by volume of fuel gas and at most 50% by volume of additive, it being possible, if appropriate, for the fuel gas fraction to be replaced by up to 20% by volume of protective gas.

According to the invention, the gas mixture preferably contains at least 95% by volume of fuel gas and at most 5% by volume of additive.

According to the invention, preferably 100 ppm by volume to 10,000 ppm by volume of hydrogen phosphide or 100 ppm by volume to 5% by volume of silane or 20 ppm by volume to 1000 ppm by volume of hydrogen sulphide or 20 ppm by volume to 1000 ppm by volume of ammonia or a mixture of two or more of these are employed as the additive.

The process according to the invention for a thermal treatment such as soldering, annealing or flame-spraying, of metallic workpieces, in particular copper-containing workpieces, using a burner device and the gas mixture according to the invention and oxygen or air or a mixture thereof is characterized in that, at least in the high-temperature phase of the thermal treatment process above 500°C, the workpiece surface is exposed to a flame atmosphere consisting of a sub-stoichiometric fuel gas/oxygen mixture with a maximum fuel gas excess of 20% by volume, and the workpiece is subsequently cooled down by means of a liquid or a gas or both.

Preferably, the oxygen fraction is added as pure oxygen, as air or as an oxygen/air mixture to the fuel gas fraction and the additive fractions, preferred according to the invention, of hydrogen phosphide, silane, hydrogen sulphide and/or ammonia are fed to the flame atmosphere either separately or together with the fuel gas.

Suitable liquids for cooling down are especially water, water/alcohol mixtures, aqueous emulsions and/or mixtures with water and surfactants and/or corrosion inhibitors; suitable gases for cooling down are especially air and/or inert gases such as CO₂ or nitrogen, also in a very cold liquid form, as well as aerosols of the abovementioned gases with the abovementioned liquids.

The process according to the invention, using the gas mixture according to the invention, is to be explained in more detail below by reference to a merely exemplary application example.

A flat copper profile, coated with a thin plastic layer, having a width of 20 mm and a thickness of 1 mm was heated by the flame of a welding torch to about 800°C for a length of 200 mm, measured from the end of the profile, the flame being formed from 1 part by volume of fuel gas and 1.05 parts by volume of oxygen. The fuel gas was acetylene (C₂H₂) to which a fraction of 500 ppm of hydrogen phosphide (PH₃) had been fed. After cooling down in water, the thermally treated surface region of the flat profile has a metallically clean appearance and can subsequently be used without further treatment, for example for a brazing process. The initially still present plastic layer burned away already at a temperature of about 500°C.

The advantageous effect results from the chemical-physical interaction of the phosphorus, generated and activated in the flame zone by thermal decomposition of the PH₃, with the copper oxide formed and with the copper material itself. In this case, as also under the action of the further preferred procedures according to the invention, further reaction products such as sulphides, phosphides, nitrides, silicides and oxides of S, P, N and Si, which are in interaction with the metal surface and the resulting oxide surface layer, are formed from the surface structure of the workpiece at or on the surface thereof, in addition to the oxides of the metals. These further reaction products have an influence on the oxidation processes on the surface of the workpiece, on the state of the oxide surface layers and on the state of the metal surface located below the oxide layer in such a way that the oxide surface layers are detached from the workpiece surface, without leaving a residue, during the intense cooling-down according to the invention.

During an analogous thermal treatment of such a flat copper profile with a welding torch flame which was fed, for example, with commercially available acetylene or hydrogen or propane or other hydrocarbons, even when varying the mixture with oxygen, a solid dark oxide layer remained adhering to the workpiece, in contrast to the solution according to the invention, and could be removed only with additional expense.

Since the chemical additives preferably employed according to the invention, namely hydrogen phosphide, silane, hydrogen sulphide and/or ammonia, themselves involve particular risks to the environment, to health and to safety, measures usual per se must be taken when applying the invention, so that off-gases from the flame atmosphere are kept at a harmless level. In particular, for a low-risk application of the process according to the invention, using the gas mixture according to the invention, it should preferably be in the form of a gas mixture made up ready for use; there are then also no safety risks as compared with the pure individual fractions of hydrogen phosphide, silane, hydrogen sulphide and/or ammonia.

Using the invention, oxide surfaces can easily be detached from a workpiece, in particular from copper-containing workpieces, without leaving a residue.

The invention can also be employed in the continuous annealing of copper wire and copper sheet. In such a case, a thermal treatment furnace, in which hitherto a protective-gas atmosphere of hydrogen or nitrogen has been used, can be replaced by the process according to the invention, which would lead to considerable savings.

A further field of application of the process according to the invention relates to the flame-spraying of copper-containing materials and the flame-spraying onto copper-containing materials. If the thermal treatment is not carried out under a protective-gas atmosphere, the workpieces must be cleaned in an acid bath, and the acids then require disposal. This also applies to flame-spraying. Particularly for reasons of protecting the environment, the process according to the invention is therefore of considerable interest in this connection.

## Claims

1. Gas mixture, containing a fuel gas, an additive and, if appropriate, a protective gas,
- hydrocarbon gases or hydrogen or a mixture thereof being present as the fuel gas,
- hydrogen phosphide or silane or hydrogen sulphide or ammonia or a mixture of two or more of these being present as the additive, and
- nitrogen or inert gases or a mixture thereof being present as the protective gas.

2. Gas mixture according to Claim 1, characterized in that the gas mixture contains at least 50% by volume of fuel gas and at most 50% by volume of additive, it being possible, if appropriate, for the fuel gas fraction to be replaced by up to 20% by volume of protective gas.

3. Gas mixture according to Claim 1 or 2, characterized in that the gas mixture contains at least 95% by volume of fuel gas and at most 5% by volume of additive.

4. Gas mixture according to one of Claims 1 to 3, characterized in that
- 100 ppm by volume to 10,000 ppm by volume of hydrogen phosphide or
- 100 ppm by volume to 5% by volume of silane or
- 20 ppm by volume to 1000 ppm by volume of hydrogen sulphide or
- 20 ppm by volume to 1000 ppm by volume of ammonia or a mixture of two or more of these
are employed as the additive.

5. Process for a thermal treatment such as soldering, annealing or flame-spraying of metallic workpieces, using a burner device and a gas mixture according to one of Claims 1 to 4 and oxygen or air or a mixture thereof,
- the workpiece surface being exposed, at least in the high-temperature phase of the thermal treatment process above 500°C, to a flame atmosphere consisting of a sub-stoichiometric fuel gas/oxygen mixture with a maximum fuel gas excess of 20% by volume, and
- the workpiece subsequently being cooled down by means of a liquid or a gas or both.

6. Process according to Claim 5, characterized in that the additive fractions of hydrogen phosphide, silane, hydrogen sulphide and/or ammonia are fed to the flame atmosphere either separately or together with the fuel gas.

7. Process according to Claim 5 or 6, characterized in that the metallic workpiece contains copper.
